# EUROPÄISCHE PATENTSCHRIFT

(11) **EP 2 682 308 B1**
(45) Veröffentlichungstag und Bekanntmachung des Hinweises auf die Patenterteilung: **09.07.2014**
(21) Anmeldenummer: 13004210.4
(22) Anmeldetag: 19.11.2010
(51) Int. Cl.: B60R 11/00, B60R 11/04, G03B 17/08, H04N 5/225

(54) **Kameraeinrichtung zur Bilderfassung eines Außenbereichs an einem Fahrzeug**
CAMERA DEVICE FOR IMAGE PICKUP OF AN OUTSIDE AREA OF A VEHICLE
Dispositif de camera pour la capture d'image d'une zone extérieue d'un vehicule

(30) Priorität: 22.12.2009 DE 102009060425
(43) Veröffentlichungstag der Anmeldung: 08.01.2014
(62) Teilanmeldung aus: 10788007.2
(73) Patentinhaber: Huf Hülsbeck & Fürst GmbH & Co. KG, 42551 Velbert (DE)
(72) Erfinder: Ulomek, Peter, 42477 Radevormwald (DE); Schütz, Heiko, 42549 Velbert (DE); Buschmann, Gerd, 42553 Velbert (DE)

(56) Entgegenhaltungen:
- EP-A1- 1 529 688
- WO-A2-2008/036965
- DE-A1-102005 014 791
- DE-A1-102007 055 182

## Beschreibung

Die Erfindung betrifft eine Vorrichtung gemäß dem Oberbegriff des Anspruchs 1. Eine solche Kameraeinrichtung wird zur Bilderfassung eines Außenbereichs an einem Fahrzeug verwendet, insbesondere zur Bilderfassung des Bereichs hinter dem Fahrzeug, vorzugsweise beim Rückwärtsfahren. Solche Kameraeinrichtungen sind bereits bekannt. Die Kamera verfügt über eine Einfahrlage, in welcher sie zumindest bereichsweise in einem Raum, dem Kameraraum, angeordnet ist, welcher gegenüber dem Außenbereich mit einer Klappe oder Ähnlichem verschlossen ist und über eine Ausfahrlage, in welcher sie Bilder des Außenbereichs erfassen kann. Dies hat den Vorteil, dass die Kamera während des üblichen Fahrbetriebs des Fahrzeugs nicht verschmutzt wird.

Die DE 10200705518A1 offenbart eine Kameraeinheit für ein Fahrerassistenzsystem.

Die EP1526988A1 beschreibt eine verschwenkbare Kameraeinheit zur Bildererfassung eines Außenbereichs.

Die EP 1 529 688 A1 beschreibt eine Kameraanordnung für Kraftfahrzeuge nach dem Oberbegriff des Anspruchs 1. Diese Kamera ist zwischen einer Einfahrlage und einer Ausfahrlage beweglich.

Die Kamera ist in einem Gehäuse angeordnet, welches über einen Führungsschlitz verfügt, durch welchen die elektrischen Leitungen der Kamera geführt werden. Alternativ kann auch auf den Führungsschlitz verzichtet werden und das Gehäuse geschlossen ausgebildet sein. In diesem Fall ist die Leitung der Kamera unbeweglich durch die Schutzwandlung geführt und im Inneren des Gehäuses entsprechend lang und flexibel ausgebildet. Nachteilig an dieser Anordnung ist es jedoch, dass gerade beim Rückwärtsfahren aus dem Auspuff austretende Abgase über das Kameragehäuse in den Innenraum des Fahrzeugs eindringen können. Dies ist insbesondere dann problematisch, wenn in dem Bereich hinter der Heckklappe Personen befindlich sind oder Tiere, wie beispielsweise Hunde, sich im Kofferraum aufhalten. Die Abgase sind giftig und könnten dann von den entsprechenden Personen oder Tieren eingeamtet werden, was zu gesundheitlichen Schäden führen kann. Wird die Kamera in dem Gehäuse gekapselt, muss eine entsprechend lange Kameraleitung in dem Gehäuse vorgesehen sein, damit die Kamera die notwendige Bewegung durchführen kann. Dies erhöht jedoch die Bauhöhe des Gehäuses, was ebenfalls problematisch ist, da in diesem Bereich normalerweise wenig Bauraum verfügbar ist.

Aufgabe der Erfindung ist es daher eine Kameraeinrichtung für Fahrzeuge zu schaffen, welche einerseits verhindert, dass Gase, insbesondere Abgas, aber auch Flüssigkeiten in den Innenraum des Fahrzeugs eindringen können und welches anderseits eine kompakte Bauweise ermöglicht. Diese Aufgabe wird durch die kennzeichnenden Merkmale des Anspruchs 1 gelöst.

In einer beschriebenen ersten Ausführungsform ist zumindest ein Gehäusebauteil als Dichtelement vorgesehen, welches aus einem fluiddichten Material besteht und den Kameraraum gegenüber dem Innenraum fluiddicht abschließt. Dieses Dichtelement besteht aus einem flexiblen, elastischen Material, wobei die elektrischen Leitungen der Kamera bzw. des Antriebs und/oder die Kamera selbst fluiddicht durch das Dichtelement geführt werden und dort festgelegt sind. Führt die Kamera nun ihre Verfahrbewegung durch, bewegen sich auch die elektrischen Leitungen der Kamera. Da das Dichtelement jedoch aus einem flexiblen elastischen Material besteht, nimmt es diese Bewegungen bzw. die Bewegungen der Kamera auf und bewegt sich mit. Da das Dichtelement aus einem fluiddichten Material besteht und auch fluiddicht montiert ist, kann so auf einfache Art und Weise der Außenbereich mit den eventuell vorhandenen Abgasen oder sonstigen unerwünschten Fluiden vom Innenraum des Fahrzeugs abgeschlossen werden. Auch ist es nicht notwendig ein längeres Kabel in dem Kameraraum vorzusehen, da sich das flexible Dichtelement mit den Leitungen, welche an die Kamera angeschlossen sind bzw. der Kamera selbst, mitbewegt. Es ist somit möglich eine fluiddichte Kameraeinrichtung zu schaffen, welche klein und kompakt ausführbar ist.

In einer Ausführungsform ist die Kamera größtenteils auf der die im Innenraum zugewandte Seite des Dichtelementes angeordnet und durchdringt nur mit ihrem Linsenreich eine Ausnehmung in dem Dichtelement. Diese Ausnehmung ist mit dem Linsenbereich bzw. einem angrenzenden Bereich fluiddicht abgedichtet. Die Kamera befindet sich somit überwiegend in Richtung des Innenraums und ist nicht nur vor Gas, sondern auch vor Flüssigkeit und Verschmutzungen geschützt. Das aus flexiblem elastischem Material bestehende Dichtelement bewegt sich dann mit der Kamera mit und führt sämtliche Bewegungen der Kamera mit durch.

Die Kameraeinrichtung ist so ausgebildet, dass die Energieversorgung der Kamera und/oder des Antriebs auf induktive Weise erfolgt, bzw. dass die Datenübertragung der Kamera über elektromagnetische Wellen erfolgen kann. Die Kamera ist im Kameraraum gekapselt, indem der bzw. die Gehäusebauteile als fluiddichtes Gehäuse ausgeführt sind. Dieses Gehäuse dichtet dann den Kameraraum gegenüber dem Innenraum fluiddicht ab. Anschlüsse oder elektrische Leitungen der Kamera bzw. des Antriebs müssen dann nicht durch das Gehäuse geführt werden. Es ist damit auch möglich das Gehäuse aus einem starren Material zu fertigen. Das Gehäuse muss so keine Bewegungen der Kamera mit durchführen. Selbstverständlich ist es hierbei auch möglich, den Antrieb außerhalb des Gehäuses vorzusehen.

Bei der erfindungsgemäßen Kameraeinrichtung ist ein Antrieb vorgesehen, welcher die Kamera in ihrer Verfahrbewegung bewegt. Er kann somit dafür sorgen, dass die Kamera von der Einfahr- in die Ausfahrlage und/oder von der Ausfahr- in die Einfahrlage bewegt wird. Der Antrieb kann sich dabei entweder auf der gleichen Seite des Dichtelementes bzw. des Gehäusebauteils wie die Kamera befinden oder auch auf gegenüberliegenden Seite. Ist der Antrieb auf der gleichen Seite vorgesehen wie Kamera und befinden sich beide im Kameraraum, so kann der Antrieb entweder induktiv mit Strom versorgt werden oder über eine durch das Dichtelement bzw. den Gehäusebauteil fluiddicht hindurchgeführte Leitung. Hierbei sind nahezu alle Möglichkeiten denkbar. Der Antrieb kann sich jedoch auch auf der gegenüberliegenden Seite des Dichtelements bzw. des Gehäusebauteils wie die Kamera befinden. Hier könnte beispielsweise die Kamera im Kameraraum selbst angebracht sein, während sich das Dichtelement im Innenraum befindet. In diesem Fall wird dann ein Antriebselement wie beispielsweise eine Welle oder Ähnliches fluiddicht durch das Dichtelement und/oder den Gehäusebauteil geführt. Ob der Antrieb sich auf der gleichen Seite wie die Kamera oder auf der gegenüberliegenden Seite befindet hängt vom jeweiligen Anwendungsfall ab.

Im Kameraraum kann zusätzlich ein Ablauf wie eine Rinne, ein Schlauch oder Ähnliches vorgesehen sein, durch welchen im Kameraraum befindliche Feuchtigkeit in den Außenbereich führbar ist. Befindet sich die Kamera in ihrer Ausfahrlage, so ist es möglich, dass Feuchtigkeit wie beispielsweise Niederschlag, Spritzwasser oder Ähnliches in den Kameraraum gelangen. Wenn die Kamera dann wieder in ihre Einfahrlage gebracht wird, kann es sein, dass sich die Feuchtigkeit im Linsenbereich der Kamera niederschlägt, was die Qualität der Bilderfassung mindert. Um dies zu vermeiden kann am Kameraraum eine Ablaufrinne vorgesehen sein. Über diese kann dann eventuelle im Kameraraum befindliche Feuchtigkeit in den Außenbereich geführt werden. Selbstverständlich ist es auch möglich, einen Schlauch, ein Rohr oder Ähnliches vorzusehen, welcher eine Verbindung zwischen Kameraraum und Außenbereich herstellt und so einen Ablauf für eventuelle im Kameraraum befindliche Feuchtigkeit schafft.

Eine Alternative um zu verhindern, dass sich Feuchtigkeit im Kameraraum ansammelt, besteht darin, einen Bereich des Gehäusebauteils und/oder des Dichtelements so zu gestalten, dass er zwar den Kameraraum fluiddicht zum Innenraum hin abdichtet, um zu verhindern, dass beispielsweise Abgase in den Innenraum hinein gelangen können, der aber vom Innenraum aus für einige Fluide zum Kameraraum hin durchlässig ist. Als Fluid bietet sich hier beispielsweise Luft an oder auch einzelne Bestandteile von Luft. Dies kann insbesondere durch eine semipermeable Membran geschehen. Ist die Öffnung vom Außenbereich zum Kameraraum hin nicht vollständig gasdicht abgeschlossen, so bildet sich durch die Luftströmung während der Fahrt im Kameraraum ein Unterdruck. Hierdurch wird durch den Bereich Luft bzw. ein anderes Fluid in den Kameraraum gesaugt. Durch den am Heck des Fahrzeugs während er Fahrt entstehenden Unterdruck wird jedoch permanent Luft aus dem Kameraraum abgesaugt, wodurch wieder Fluid vom Innenraum durch den Bereich in den Kameraraum einströmt. Hierdurch wird im Kameraraum befindliche Feuchtigkeit ebenfalls abgesaugt und der Kameraraum wird so getrocknet.

Weitere Vorteile und Ausführungsformen der Erfindung ergeben sich aus den Unteransprüchen, der nachfolgenden Beschreibung, sowie den Zeichnungen. In den Zeichnungen ist die Erfindung in drei Ausführungsformen dargestellt. Es zeigen
- Fig. 1:: Eine nicht erfindungsgemäße Ausführungsform in Einfahrlage im Schnitt.
- Fig. 2:: Die nicht erfindungsgemäße Ausführungsform aus Figur 1 in Ausfahrlage.
- Fig. 3:: Die nicht erfindungsgemäße Ausführungsform gemäß Figur 1 und 2 an einem Griff montiert mit Antrieb.
- Fig. 4:: Ein erfindungsgemäßes Dichtelement gemäß Figur 1 bis 3.
- Fig. 5:: Eine weitere nicht erfindungsgemäße Ausführungsform
- Fig. 6:: Eine Ausführungsform der Erfindung gemäß Anspruch 1.

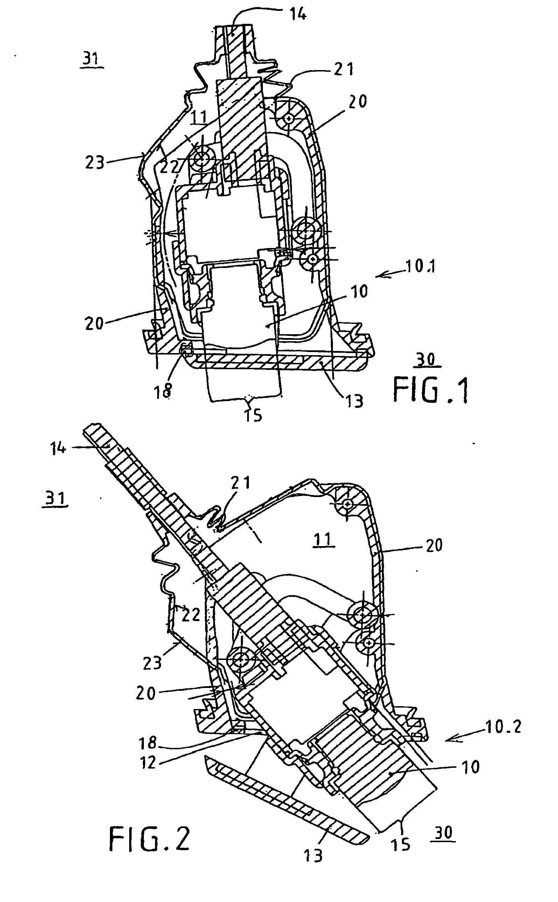

Figuren 1 und 2 zeigen eine nicht erfindungsgemäße Ausführungsform der Kameraeinrichtung. In Figur 1 ist die Kameraeinrichtung in Einfahrlage 10.1 der Kamera 10 gezeigt. Die Klappe 13 schließt die Öffnung 12. Im Bereich der Öffnung 12 ist ein Dichtorgan 18 vorgesehen, welches den Kameraraum 11 in der Einfahrlage 10.1 der Kamera 10 gegenüber dem Außenbereich 30 abdichtet. So wird verhindert, dass in der Einfahrlage 10.1 der Kamera 10 Schmutz und/oder Feuchtigkeit in den Kameraraum 11 eindringen können.

Neben dem Gehäusebauteil 20 ist ein Dichtelement 21 vorgesehen. Dieses ist hier in Form eines Balgs, nämlich eines Faltenbalgs, ausgeführt. Auch andere Balgformen sind selbstverständlich denkbar. Der Balg besteht aus einem elastischen flexiblen Material, wie beispielsweise vulkanisiertes Gummi oder auch ein spritzgegossenes Material. Selbstverständlich sind auch andere Materialen denkbar. Es ist auch möglich das Dichtelement 21 mit oder ohne den Gehäusebauteil als Zwei-Komponenten-Bauteil auszuführen. So kann das Dichtelement starre Bereiche aufweisen und dazu auch einen flexiblen elastischen Bereich, welcher für die erforderliche Beweglichkeit des Dichtelements sorgt.

Die elektrischen Leitungen 14 der Kamera 10 sind an dem Dichtelement 21 fluiddicht befestigt. Wird jetzt die Kamera 10 von ihrer in Figur 1 gezeigt Einfahrlage 10.1 in ihre in Figur 2 gezeigt Ausfahrlage 10.2 bewegt, so bewegen sich die elektrischen Leitungen 14 der Kamera 10 mit und damit auch das Dichtelement 21. Durch die Flexibilität des Dichtelements 21 ist es möglich, die gesamte Kameraeinrichtung sehr kompakt und klein auszuführen.

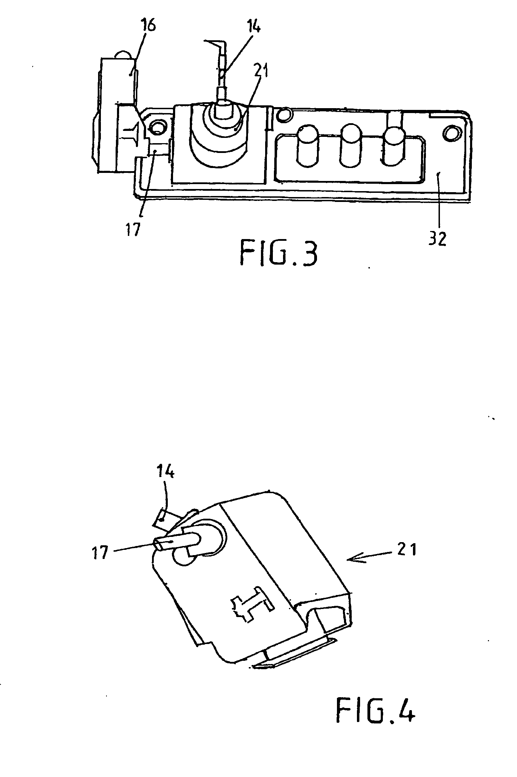

Figur 3 zeigt nun ein konkretes Anwendungsbeispiel der Ausführungsform gemäß den Figuren 1 und 2. Der Gehäusebauteil 20 sowie das Dichtelement 21 sind an einem Griff 32, hier einem Griff 32 einer Heckklappe eines Fahrzeugs, befestigt. Aus dem Dichtelement 21 ragen die elektrischen Leitungen 14 der Kamera 10 heraus. Diese ist hier nicht näher erkennbar. Es ist selbstverständlich auch denkbar, dass die Kameraeinrichtung an einer anderen Stelle montiert wird, anstatt an einem Griff 32. Hier bieten sich beispielsweise die Heckklappe, eine Beleuchtungseinrichtung, das Nummernschild, eine Stoßstange bzw. ein Stoßfänger und/oder ein Karosseriebauteil an. Auch andere Stellen am Kraftfahrzeug sind denkbar, wobei bei der Auswahl der passenden Stelle es insbesondere darauf ankommt, dass die Kamera 10 in Ihrer Ausfahrlage 10.2 den gewünschten Außenbereich des Fahrzeuges erfassen kann.

Des Weiteren ist ein Antrieb 16 vorgesehen, welcher sich jedoch außerhalb des Dichtelements 21 und der Gehäusebauteile 20 befindet. Lediglich ein Antriebselement 17, hier eine Welle, ragt in das Dichtelement 21 hinein, um dort die Kamera 10 von ihrer Einfahrlage 10.1 in ihre Ausfahrlage 10.2 und wieder zurück verfahrbar zu machen. Die Stelle wo das Antriebselement 17 in das Dichtelement 21 hineinragt ist ebenfalls fluiddicht abgedichtet.

Figur 4 zeigt nunmehr ein Dichtelement 21. Dieses kann über einen oder mehrere Gehäusebauteile 20 gestülpt werden und besteht vollständig aus einem elastischen Material. Der Bereich an dem die elektrischen Leitungen 14 der Kamera 10 aus dem Dichtelement 21 herausragen ist auch hier wieder nach Art eines Balgs, nämlich eines Faltenbalgs gestaltet. Seitlich erkennt man noch den Ansatz des Antriebselements 17 an welchen der Antrieb 16 angeschlossen werden kann um die Kamera 10 zwischen ihrer Einfahrlage 10.1 und ihrer Ausfahrlage 10.2 verfahrbar zu gestalten. Der Antrieb 16 ist hier auf der einen Seite 22 des Dichtelements 21, welche dem Innenraum 31 zugewandt ist, angeordnet, während sich die Kamera 10 auf der anderen Seite 23 des Dichtelements 21, welche dem Kameraraum 11 zugewandt ist, befindet. Selbstverständlich ist es auch möglich, den Antrieb 16 auf der gleichen Seite 22, 23 des Dichtelements 21 vorzusehen wie die Kamera 10.

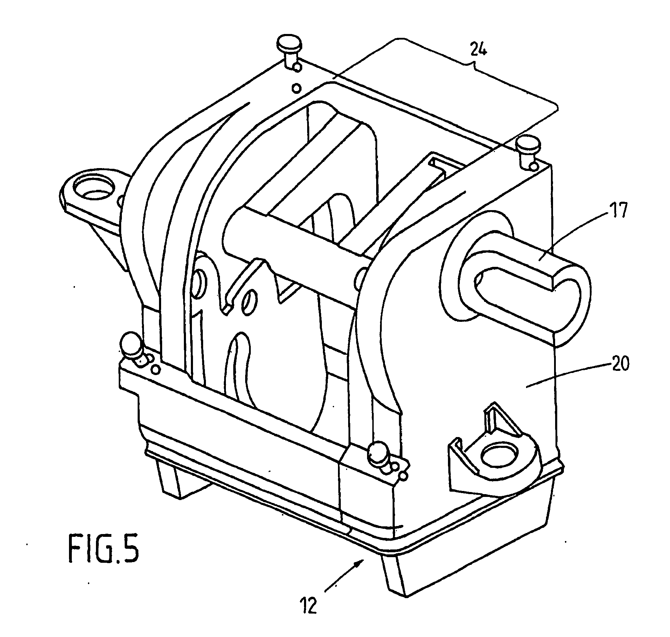

Figur 5 zeigt ein weiteres Ausführungsbeispiel. Hier sind Gehäusebauteile 20 vorgesehen in welche die Kamera 10 aufnehmbar ist. Der Antrieb 16 ist wiederum außerhalb des Gehäusebauteils 20 angeordnet, wobei ein Antriebselement 17 den Gehäusebauteil 20 durchdringt und die Kamera 10 zwischen ihrer Einfahrlage 10.1 und ihrer Ausfahrlage 10.2 verfahrbar macht. Der Gehäusebauteil 20 weist einen Durchbruch 24 auf, welcher von einem hier nicht näher gezeigten Dichtelement 21 verschließbar ist. Hierbei ist das Dichtelement 21 fluiddicht an dem Gehäusebauteil 20 befestigbar. Auch dieses Dichtelement 21 kann wiederum im Bereich der elektrischen Leitung 14 der Kamera 10 als Balg ausgebildet sein.

Insgesamt ist festzustellen, dass das Dichtelement 21 sich auf der der Kamera 10 abgewandten Seite des Gehäusebauteils 20 oder auch auf der der Kamera 10 zugewandten Seite des Gehäusebauteils 20 befinden kann. Es kann den oder die Gehäusebauteile 20 dabei vollständig umschließen bzw. von innen auskleiden. Es ist aber auch möglich das Dichtelement 21 so vorzusehen, dass es nur Durchbrüche 24 bzw. Lücken der Gehäusebauteile 20 überdeckt. Durch die Verwendung des zumindest bereichsweise flexiblen Dichtelements 21 kann so eine fluiddichte Abdichtung zwischen dem Kameraraum 11 und dem Innenraum 31 erfolgen.

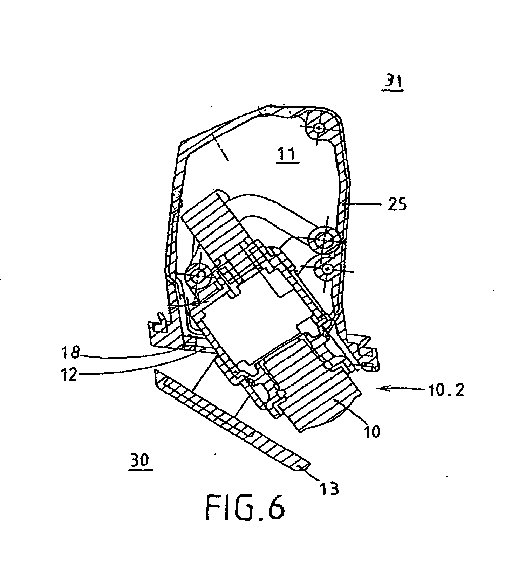

Ein Ausführungsbeispiel der Erfindung gemäß Patentanspruch 1 zeigt die Figur 6. Die hier dargestellte Kamera 10 verfügt nicht über elektrische Leitungen 14. Vielmehr wird sie auf induktivem Wege mit Strom versorgt. Die von der Kamera 10 erfassten Bilder können dann mittels elektromagnetischer Wellen an eine im Fahrzeug befindliche Elektronik, ein Steuergerät oder Ähnliches übertragen werden. Hierfür eignen sich die unterschiedlichsten Möglichkeiten der Übermittlung von Daten über elektromagnetische Wellen so beispielsweise Funk, Bluetooth oder Ähnliches.

Dadurch, dass es nicht notwendig ist, die elektrischen Leitungen 14 der Kamera 10 durch ein Dichtelement 21 zu führen, können die Gehäusebauteile 20 als Gehäuse 25 ausgebildet werden. Dieses Gehäuse 25 kann auch vollständig aus starrem Material sein. Im Inneren des Gehäuses 25 befindet sich dann der Kameraraum 11. Hierdurch ist es wiederum möglich, eine kompakte Baugruppe auszubilden, welche wenig Platz beansprucht. Auch kann man die Gehäusebauteile 20 bzw. das Gehäuse 25 auf einfache Art fluiddicht gestalten.

Der Antrieb 16 kann dann entweder innerhalb des Kameraraumes 11 oder außerhalb des Kameraraumes 11 vorgesehen sein. Im letzteren Fall durchdringt wiederum ein Antriebselement 17 einen Gehäusebauteil 20 bzw. das Gehäuse 25. Befindet sich der Antrieb 16 innerhalb des Kameraraumes 11, so erfolgt sie Stromübertragung zum Antrieb 16 ebenfalls auf induktivem Wege. Wird der Antrieb 16 außerhalb der Gehäusebauteile 20 bzw. des Gehäuses 25 vorgesehen, so kann die Stromübertragung auf herkömmliche Art und Weise erfolgen.

Abschließend sei noch darauf hingewiesen, dass die hier dargestellten Ausführungsformen lediglich beispielhafte Verwirklichungen der Erfindung sind. Diese ist nicht darauf beschränkt. Es sind vielmehr noch Abänderungen und Abwandlungen möglich.

### Bezugszeichenliste

- 10: Kamera
- 10.1: Einfahrlage
- 10.2: Ausfahrlage
- 11: Kameraraum
- 12: Öffnung
- 13: Klappe
- 14: Elektrische Leitungen von 10
- 15: Linsenbereich
- 16: Antrieb
- 17: Antriebselement
- 18: Dichtorgan
- 20: Gehäusebauteil
- 21: Dichtelement
- 22: Eine Seite von 21
- 23: Andere Seite von 21
- 24: Durchbruch von 20
- 25: Gehäuse
- 30: Außenbereich
- 31: Innenraum
- 32: Griff

## Patentansprüche

1. Kameraeinrichtung zur Bilderfassung eines Außenbereichs (30) an einem Fahrzeug,
umfassend eine Kamera (30) und einen Raum (Kameraraum 11), in welchen die Kamera (10) zumindest bereichsweise aufnehmbar ist und welcher zum Außenbereich (30) hin eine Öffnung aufweist, und mit einem Innenraum (31) des Fahrzeugs, welcher insbesondere Bereiche des Kofferraums und/oder des Fahrgastraums umfassen kann,
und wobei die Kamera (10) in eine Einfahrlage (10.1), in welcher sie in dem Kameraraum (11) befindlich und die Öffnung (12) mit einer Klappe (13) od. dgl. Abgedeckt ist, und in eine Ausfahrlage (10.2), in welcher die Kamera (10) Bilder des Außenbereichs (30) erfassen kann, mittels eines Antriebs über eine Verfahrbewegung beweglich ist,
**dadurch gekennzeichnet, dass**
die Datenübertragung der Kamera (10) über elektromagnetische Wellen erfolgt, wobei die von der Kamera (10) erfassten Bilder mittels der elektromagnetischen Wellen an eine im Fahrzeug befindliche Elektronik, Steuergerät oder Ähnliches übertragen werden, wobei die Kamera im Kameraraum gekapselt ist.

2. Kameraeinrichtung nach Anspruch 1, **dadurch gekennzeichnet, dass** die Übermittlung der Daten per Funk oder Bluetooth erfolgt.

## Claims

1. A camera device for image capture of an external area (30) of a vehicle,
comprising a camera (30) and a space (camera space 11), in which the camera (10) can at least partially be received and which comprises an opening towards the external area (30), and with an internal space (31) of the vehicle, which in particular can comprise areas of the boot and/or the passenger compartment,
and wherein the camera (10) is movable by means of a drive via a traversing movement into a retracted position (10.1), in which it is located inside the camera space (11) and the opening (12) is covered by a flap (13) or the like, and into a pull-out position (10.2), in which the camera (10) can capture images of the external area (30),
**characterised in that**
data transmission of the camera (10) is effected via electromagnetic waves, wherein the images captured by the camera (10) are transmitted by means of the electromagnetic waves to an electronics, a control device or the like located inside the vehicle, wherein the camera is encapsulated in the camera space.

2. The camera device according to claim 1, **characterised in that** the transmission of data is effected via radio or Bluetooth.

## Revendications

1. Dispositif de caméra pour la capture d'image d'une zone extérieure (30) sur un véhicule,
comprenant une caméra (30) et un espace (espace de caméra 11), danslequel la caméra (10) peut être renfermée au moins par portions et qui présente une ouverture dans la direction de la zone extérieure (30), et comportant un espace intérieur (31) du véhicule, qui peut comprendre notamment des zones de l'espace du coffre et/ou de l'habitacle du véhicule,
et dans lequel la caméra (10) est mobile, au moyen d'un entraînement sur un mouvement de déplacement, dans une direction rétractée (10.1), dans laquelle elle se trouve dans l'espace de camaré (11) et l'ouverture (12) est recouverte par un clapet (13) ou similaire, et dans une position déployée (10.2), dans laquelle la caméra (10) peut cpaturer des images de la zone extérieure (30),
**caractérisé en ce que**
la transmission des données de la caméra (10) se fait par des ondes électromagnétiques, dans lequel les images capturées par la caméra (10) sont transmises au moyen des ondes électromagnétiques à un dispositif électrique, un appareil de commande ou similaire se trouvant dans le véhicule, dans lequel la caméra est encapsulée dans l'espace de caméra.

2. Dispositif de caméra selon la revendication 1, **caractérisé en ce que** la transmission des données se fait par radio ou Bluetooth.
